# EUROPÄISCHE PATENTANMELDUNG

(11) **EP 0 710 677 A2**
(43) Veröffentlichungstag der Anmeldung: **08.05.1996**
(21) Anmeldenummer: 95810655.1
(22) Anmeldetag: 24.10.1995
(51) Int. Cl.: C08F 10/00, C08F 2/38, C08F 2/44, C08K 5/00, C08K 5/527, C08K 13/02

(54) **Verfahren zur Herstellung von stabilisierten Olefinpolymeren**

(30) Priorität: 03.11.1994 CH 19940003285
(71) Anmelder: CIBA-GEIGY AG, CH-4002 Basel (CH)
(72) Erfinder: Brunner, Martin, CH-1723 Marly (CH); Rotzinger, Bruno Dr., CH-4127 Birsfelden (CH); Schmutz, Thomas, CH-4125 Riehen (CH); Stauffer, Werner, CH-1700 Freiburg (CH)

(57) **Zusammenfassung**

Es wird ein Verfahren zur Herstellung von Olefinpolymeren durch Polymerisation an einem Übergangsmetallkatalysator unter Zusatz eines Aminoalkyl-1,1'-biphenyl-2,2'-diyl-phosphits oder Aminoalkyl-2,2'-alkyliden-bis-(phenyl)-phosphits, gegebenenfalls in Kombination mit weiteren Zusätzen, beschrieben; die so erhältlichen Polymerisate weisen eine ausgezeichnete Langzeitstabilität auf.

## Beschreibung

Die vorliegende Erfindung betrifft ein Verfahren zur Herstellung von stabilisierten Olefinpolymeren, wobei während der Polymerisation ein Stabilisator und gegebenenfalls weitere Zusätze zugegeben werden. Die Erfindung betrifft auch die so hergestellten Olefinpolymere.

Die Niederdruck-Polymerisation von Olefinen mittels metallorganischen Komplexkatalysatoren (z.B. Ziegler-Natta-Katalysatoren) führt üblicherweise zu einem feinpulverigen Polymerisat, das vor der formgebenden Verarbeitung in einem Extruder granuliert wird. Bei dieser Granulierung werden dem Polymeren Substanzen wie z.B. Stabilisatoren, korrosionsverhindernde Verbindungen, Farbverbesserer, Antistatika oder sonstige Verarbeitungshilfsmittel zugesetzt. Diese Granulierung ist jedoch nicht immer erwünscht oder möglich, wie z.B. bei hochmolekularen Polymeren.

Neuerdings ist es gelungen, durch Verwendung von Übergangsmetallkatalysatoren (festen Trägerkatalysatoren) sphärische granulatartige Polymerisate herzustellen, die nicht mehr durch Extrusion granuliert werden müssen sondern direkt verarbeitet werden können.

Da die dabei erhaltenen Polymerisate nicht mehr granuliert werden, ergab sich auch hier der Wunsch, Zusätze, die für die Verarbeitung bzw. die Langzeitstabilität wichtig sind, bereits bei der Polymerisation zuzugeben. Hierzu gehören auch Zusätze, die die korrosive Wirkung des Polymerisats gegenüber Metalloberflächen, im allgemeinen auf Katalysatorreste oder Abbauprodukte des Katalysatorsystems zurückgeführt, vermindern.

Es ist bekannt (EP-A-192 987 oder US-5,244,948), dass sterisch gehinderte Aminstabilisatoren vom Typ der Polyalkylpiperidine die Polymerisation nicht stören und das Polymerisat nicht wesentlich verfärben und eine gute thermisch-oxidative Stabilisierung bewirken.

Es wurde weiterhin vorgeschlagen (EP-A-254 348), organische Phosphite oder Phosphonite während der Polymerisation als Antioxidantien zuzusetzen.

Es ist weiterhin bekannt sterisch gehinderte Aminstabilisatoren vom Typ der Polyalkylpiperidine und organische Phosphite oder Phosphonite in Kombination bei der Polymerisation zuzusetzen (US-5,045,577).

Überraschend wurde nunmehr gefunden, dass der Zusatz von Aminoalkyl-1,1'-biphenyl-2,2'-diyl-phosphiten oder Aminoalkyl-2,2'-alkyliden-bis-(phenyl)-phosphiten, gegebenenfalls in Kombination mit weiteren Zusätzen, die Polymerisation von Olefinen nicht beeinträchtigt und zu einer ausgezeichneten Langzeitstabilität des Polymeren führt. Hervorzuheben ist gute Farbhaltung bei Kontakt des Polymeren mit Wasser.

Die Erfindung betrifft daher ein Verfahren zur Herstellung von Olefinpolymeren durch Polymerisation an einem Übergangsmetallkatalysator, dadurch gekennzeichnet, dass man die Polymerisation unter Zusatz mindestens einer Verbindung der Formel 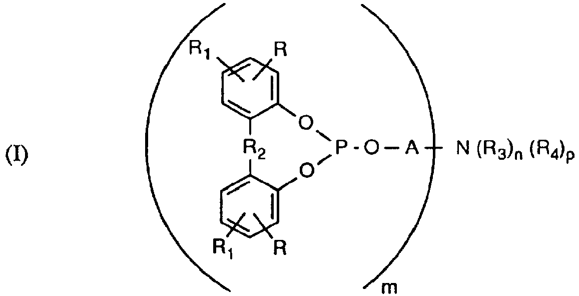 durchführt, worin
n = 1 und p = 1 sind, wenn m = 1 ist;
n = 1 und p = 0 sind, wenn m = 2 ist;
und n und p null sind, wenn m = 3 ist;
und worin R für eine Alkylgruppe mit 1 bis 18 Kohlenstoffatomen;
R₁ für Wasserstoff oder eine Alkylgruppe mit 1 bis 18 Kohlenstoffatomen;
R₂ für eine direkte Bindung oder Alkylen mit 1 bis 12 Kohlenstoffatomen;
A für Alkylen mit 1 bis 6 Kohlenstoffatomen oder Cycloalkylen mit 5 oder 6 Kohlenstoffatomen;
R₃ für Alkyl mit 1 bis 18 Kohlenstoffatomen oder 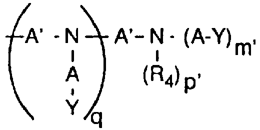 wobei Y 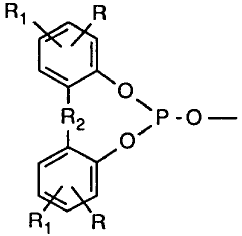
und A' Alkylen mit 1 bis 6 Kohlenstoffatomen oder Cycloalkylen mit 5 oder 6 Kohlenstoffatomen darstellen;
m' 1 oder 2;
p' 0 oder 1; und
q 0-5 sind; sowie
A, R, R₁ und R₂ die oben angegebene Bedeutung haben,
mit der Massgabe, dass, wenn p, p' und q 0 sind, -N-A'-N eine Diazacycloalkylgruppe mit 2 bis 10 Kohlenstoffatomen bedeuten kann oder, wenn m 1 und p 0 sind, N-R₃ eine Azacycloalkylgruppe mit 2 bis 10 Kohlenstoffatomen oder eine Azaoxacycloalkylgruppe mit 3 bis 7 Kohlenstoffatomen bedeutet;
und R₄ für Alkyl mit 1 bis 18 Kohlenstoffatomen steht.

Bevorzugte Verbindungen im Rahmen der obigen Konstitution sind solche, bei denen sich R im Phenylring jeweils in der ortho-Stellung zum Phosphitsauerstoff befindet.

Die Gruppen R und R₁ sind vorzugsweise geradkettiges oder verzweigtes Alkyl mit 4-8 Kohlenstoffatomen, wie n-Butyl, sek.-Butyl, tert.-Butyl, tert.-Pentyl, 2-Ethylhexyl, n-Octyl und 1,1,3,3,-Tetramethylbutyl. Besonders bevorzugt sind die Gruppen tert.-Butyl, tert.-Pentyl und 1,1,3,3-Tetramethylbutyl. Ferner befindet sich die Gruppe R₁ besonders bevorzugt in der para-Stellung zum Sauerstoff, insbesondere wenn R₁ tert.-Alkyl bedeutet.

R₁ kann Wasserstoff oder Alkyl mit 1 bis 18 Kohlenstoffatomen sein, doch steht es bevorzugt für eine Alkylgruppe mit 1 bis 8 Kohlenstoffatomen, die entweder geradkettig oder verzweigt ist Besonders bevorzugt wird tert-Alkyl mit 4 bis 8 Kohlenstoffatomen.
R₂ ist vorzugsweise eine direkte Bindung oder Alkylen der Formel 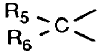 worin R₅ und R₆ unabhängig voneinander Wasserstoff, Alkyl mit 1 bis 7 Kohlenstoffatomen oder Aryl bedeuten, mit der Massgabe, dass die Gesamtzahl Kohlenstoffatome 12 nicht übersteigt. Typische Arylgruppen sind unter anderem Phenyl, Tolyl, Mesityl, Xylyl sowie 1- und 2-Naphthyl.

Besonders bevorzugt ist R₂ eine direkte Bindung, Methylen oder Ethyliden.

R₃ und R₄ sind vorzugsweise Alkyl mit 1 bis 4 Kohlenstoffatomen.

A ist vorzugsweise Ethylen oder Trimethylen.

Besonders bevorzugt sind Verbindungen der Formel (I), wobei m eine Zahl 1, 2 oder 3 ist; R C₁-C₄-Alkyl; R₁ C₁-C₈-Alkyl; R₂ eine direkte Bindung, Methylen oder Ethyliden; und R₃ und R₄ C₁-C₄-Alkyl bedeuten.

Ganz besonders bevorzugte, erfindungsgemässe Verbindungen sind N-Methyliminodiethanol-bis-(3,3',5,5'-tetra-tert.-butyl-1,1'-biphenyl-2,2'-diyl)-phosphit und speziell 2,2',2"-Nitrilotriethanol-tris-(3,3',5,5'-tetra-tert.-butyl-1,1'-bi-phenyl-2,2'-diyl)-phosphit.

Im allgemeinen verwendet man 0,005 bis 0,5 Gew.-%, insbesondere 0,02 bis 0,2 Gew.-%, bezogen auf das Polymere an Aminoalkyl-1,1'-biphenyl-2,2'-diyl-phosphit oder Aminoalkyl-2,2'-alkyliden-bis-(phenyl)-phosphit.

Die mit diesem Verfahren polymerisierbaren Olefine sind Ethylen und α-Olefine, wie z. B. Propylen, 1-Buten, 4-Methylpenten-1,5-Methylhexen-1 oder Styrol, sowie Gemische von Olefinen wie z.B. Ethylen-Propylen oder Propylen im Gemisch mit kleineren Mengen höherer α-Olefine. Bevorzugt sind hierbei C₂- oder C₃-Olefine, deren Copolymere und Styrol. Von besonderem Interesse ist das Verfahren für die Polymerisation und Copolymerisation von Ethylen und Propylen, insbesondere für hochmolekulares PE oder PP. Unter hochmolekularem PE ist ein PE mit einem hohen Molekulargewicht d.h. MW grösser 250000 beziehungsweise Schmelzindex kleiner 1 g/10 min bei 5 kg und 190°C zu verstehen.

Die verwandten Polymerisationskatalysatoren sind Übergangsmetallkatalysatoren. Es kommen hierfür neben den klassischen Ziegler-Katalysatoren auch, bevorzugt, feste Trägerkatalysatoren in Frage. Verwendbare Trägerkatalysatoren bestehen beispielsweise aus einer Verbindung eines Übergangsmetalls (wie einem Element der IV.-Nebengruppe, beispielsweise Titan, Zirkon oder Hafnium, oder auch Chrom) und einem festen Träger (wie einem Magnesiumhalogenid, Aluminiumoxid oder Siliziumdioxid).

Feste Trägerkatalysatoren eines Elementes der IV.-Nebengruppe bestehen beispielsweise aus einem wasserfreien Magnesiumdihalogenid in aktiver Form und einer Titanverbindung. Es kommen auch Katalysatoren mit den übrigen Metallen der IV.-Nebengruppe (Zr und Hf) in Frage. Unter Magnesiumdihalogenid in aktiver Form ist ein solches zu verstehen, in dessen Röntgenspektrum die Linie der stärksten Reflexion verbreitert ist gegenüber der entsprechenden Linie im Spektrum des inaktiven Magnesiumdihalogenids. Vorzugsweise wird als Magnesiumdihalogenid Magnesiumdichlorid oder Magnesiumdibromid verwandt. Die Titanverbindung enthält vorzugsweise mindestens eine Titan-Halogen-Bindung, besonders bevorzugt verwendet man Titantetrachlorid. Die Titanverbindung kann in Kombination mit einem Elektronendonator verwandt werden, beispielsweise einem Carbonsäureester, wie dies in der EP-A-0 045 977 beschrieben ist, oder einem aliphatischen Ether, wie dies in der EP-A-0 361 494 beschrieben ist. Nach der Umsetzung der Magnesiumdihalogenid-Komponente mit der Titanverbindung und gegebenenfalls mit dem Elektronendonator werden die überschüssige Titanverbindung und der überschüssige Elektronendonator zweckmässig mit einem inerten Lösungsmittel ausgewaschen, beispielsweise mit Hexan oder Heptan. Der so bereitete Katalysator wird aktiviert durch Umsetzung mit einer Aluminiumverbindung, welche mindestens einen Alkylrest trägt, die vorzugsweise als Lösung in einem Alkan verwandt wird. Beispiele für geeignete Aluminiumalkyle sind Al(C₂H₅)₃ oder Al(C₄H₉)₃. Hierbei kann man als Coaktivator einen Elektronendonator zusetzen wie z.B. eine organische Siliziumverbindung, die mindestens eine Si-O-C-Bindung enthält, wie dies z.B. in der EP-A-0 045 977 beschrieben ist. Beispiele für solche Siliziumverbindungen sind Phenyltriethoxysilan, Phenyltrimethoxysilan, Diphenyldimethoxysilan, Methyltriethoxysilan, Dimethyldiethoxysilan, Ethyltrimethoxysilan, Cyclohexyltriethoxysilan, Dicyclohexyldiethoxysilan, Cyclohexyltrimethoxysilan oder Dicyclohexyldimethoxysilan.

Weitere Übergangsmetallkatalysatoren bestehen beispielsweise aus einer Chromverbindung, die auf einen festen Träger, z.B. Aluminiumoxid oder Siliziumdioxid oder deren Mischungen aufgetragen ist. Beispiele für solche auch Phillips-Katalysatoren genannten Katalysatoren finden sich in US 2,825,721. Silicagel mit grossem Porenvolumen und grosser Oberfläche (z.B. Davison Chemical Division grade 952) wird dazu mit einer Chromsalzlösung (z.B. Chromtrichlorid oder Chromtrioxid in Wasser) versetzt. Die Chrommenge wird so bestimmt, dass das Silicagel mit etwa 0,1 bis 3 % Chrom belegt ist (bevorzugt etwa 1 % Chrom), die eingesetzte Wassermenge entspricht dem Porenvolumen des Silicagels. Neben Silicalgel können andere Träger verwandt werden, wie z.B. Alumina, Alumina-Silica, Aluminiumphosphate (EP 215336, W.R.Grace & Co.), deren Oberfläche kann modifiziert sein (z.B. fluorhaltige Träger, US 4011382, Union Carbide). Die Träger sind so gestaltet, dass sie nach der Aktivierung mit trockener Luft oder Sauerstoff eine Oberfläche von mehr als 50 m²/g und ein Porenvolumen von mehr als 0,5 ml/g haben. Anstelle einer reinen Chromverbindung können auch Chrom/Titan oder Chrom/Eisenmischungen eingesetzt werden (US 4011382, Union Carbide, DE 2210959, US 4041224, Chemplex Co.).

Die mit Chrom belegten Träger werden gewöhnlich in trockener Luft oder Sauerstoff bei Temperaturen von 500 bis etwa 1000°C aktiviert, wobei Temperaturen von 700 bis 900°C bevorzugt sind. Es wird angenommen, dass die Chromverbindung dann als Chrom-VI vorliegt. Nach der Sauerstoffbehandlung können diese Katalysatoren mit CO oder Ethylen aktiviert werden. Die Aktivierung geschieht unterhalb einer Temperatur von 500°C, bevorzugte Temperaturen sind 200-350°C. Dabei wird die Chromverbindung zu Chrom II bis IV reduziert. Die so aktivierten Katalysatoren haben keine Induktionszeit. Ohne diese Aktivierung geschieht die Aktivierung während der Polymerisation. Im Batchprocess wird häufig eine Induktionszeit beobachtet. Die aktive Chromverbindung kann auch als chromorganische Verbindung auf einem Trägeraufgetragen werden, z.B. Chromocenedichlorid (W. L. Carrick, et al., J. Polym. Sci., A1, 10, 2609-2620 (1972), F.J. Karol, et al., J. Polym. Sci., A1, 10, 2621-2637 (1972), DE 2802517, US 3709853, DE 2742543, Union Carbide).
Die Polymerisation mit diesen Katalysatoren kann nach bekannten Methoden in flüssiger oder gasförmiger Phase durchgeführt werden. Die flüssige Phase kann z.B. ein aliphatischer Kohlenwasserstoff sein oder das flüssige Monomer selbst.

Erfindungsgemäss werden die Aminoalkyl-1,1'-biphenyl-2,2'-diyl-phosphite oder Aminoalkyl-2,2'-alkyliden-bis-(phenyl)-phosphite am Beginn, während oder gegen Ende der Polymerisation dem Polymerisationsmedium zugesetzt. Bei Batchpolymerisationen werden die genannten Verbindungen und gegebenenfalls die weiteren Zusätze vorzugsweise am Beginn zugesetzt Bei den häufig grosstechnisch durchgeführten kontinuierlichen Polymerisationen werden die genannten Verbindungen und gegebenenfalls die weiteren Zusätze ebenfalls kontinuierlich zugegeben; entweder separat oder gemeinsam mit den Monomeren.

Bevorzugt wird das erfindungsgemässe Verfahren unter Verwendung von zusätzlichen Stabilisatoren durchgeführt.

Eine besonders bevorzugte Ausführung der Erfindung ist es, obiges Verfahren unter zusätzlicher Zugabe mindestens einer Verbindung durchzuführen, welche mindestens einen 2,2,6,6-Tetramethylpiperidinrest aufweist oder unter zusätzlicher Zugabe mindestens eines Antioxidans vom Typ der sterisch gehinderten Phenole, wobei die gemeinsame Verwendung einer solchen 2,2,6,6-Tetramethylpiperidinverbindung mit einem Phenol ganz besonders bevorzugt ist.

Neben den genannten bevorzugten zusätzlich verwendbaren Stabilisatoren kann die Polymerisation auch noch unter Zusatz mindestens einer unter den Reaktionsbedingungen kein Wasser freisetzenden Verbindung aus der Reihe der Hydrotalcite, Zeolithe, Metallseifen, Metallcarbonate oder Metalloxide erfolgen.

Die sterisch gehinderten Amine, vorzugsweise Piperidinverbindungen, sind vor allem als Lichtschutzmittel bekannt sind, sie wirken hier jedoch auch als Antioxidantien, d.h. sie verleihen dem Polymeren eine thermisch-oxidative Stabilität. Diese Verbindungen enthalten die Gruppe der Formel I 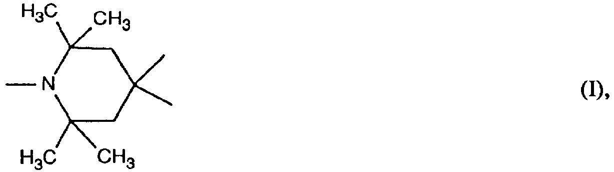 einmal oder mehrmal. Es können Verbindungen von relativ niedrigem Molekulargewicht (<700) oder von höherem Molekulargewicht sein. In letzterem Fall kann es sich auch um oligomere oder polymere Produkte handeln.

Von Bedeutung als Stabilisatoren sind insbesondere die folgenden Klassen von Tetramethylpiperidinverbindungen.

### a) Verbindungen der Formel II

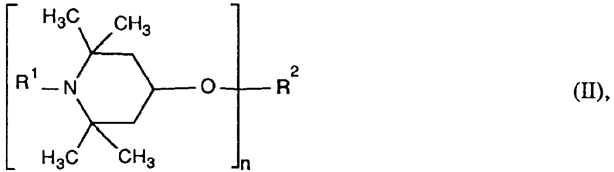

worin n eine Zahl von 1 bis 4, vorzugsweise 1 oder 2 bedeutet, R¹ Wasserstoff, Oxyl, C₁-C₁₂-Alkyl, C₃-C₈-Alkenyl, C₃-C₈-Akinyl, C₇-C₁₂-Aralkyl, C₁-C₈-Alkanoyl, C₃-C₅-Alkenoyl, Glycidyl oder eine Gruppe -CH₂CH(OH)-Z, worin Z Wasserstoff, Methyl oder Phenyl ist, bedeutet, wobei R¹ vorzugsweise C₁-C₄-Alkyl, Allyl, Benzyl, Acetyl oder Acryloyl ist und R², wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von C₁-C₁₈-Alkyl kann R² z.B. die oben angeführten Gruppen und dazu noch beispielsweise n-Tridecyl, n-Tetradecyl, n-Hexadecyl oder n-Octadecyl darstellen.

Wenn R¹ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

R¹ ist als C₃-C₈-Alkinyl bevorzugt Propargyl.

Als C₇-C₁₂-Aralkyl ist R¹ insbesondere Phenethyl und vor allem Benzyl.

R¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet R² einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.

Bedeutet R² einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt R² einen dreiwertigen Rest einer Tricarbonsäure dar, so bedeutet es z.B. einen Trimellitsäure- oder einen Nitrilotriessigsäurerest.

Stellt R² einen vierwertigen Rest einer Tetracarbonsäure dar, so bedeutet es z.B. den vierwertigen Rest von Butan1,2,3,4-tetracarbonsäure oder von Pyromellitsäure.

Bedeutet R² einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Polyalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di- (2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Propargyl-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Dibenzyl-malonsäure-di-(1,2,2,6,6-pentamethylpiperidin-4-yl)-ester
25) Dibenzyl-malonsäure-di-(1,2,3,6-tetramethyl-2,6-diethyl-piperidin-4-yl)ester
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

### b) Verbindungen der Formel (III)

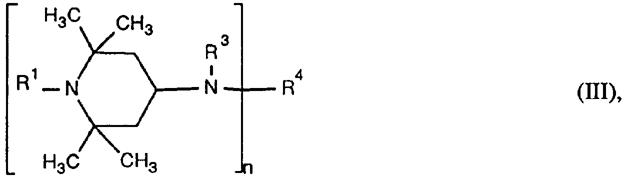

worin n die Zahl 1 oder 2 bedeutet, R¹ die unter a) angegebene Bedeutung hat, R³ Wasserstoff, C₁-C₁₂-Alkyl, C₂-C₅-Hydroxyalkyl, C₅-C₇-CycloaBy7, C₇-C₈-Aralkyl, C₂-C₁₈-Alkanoyl, C₃-C₅-Alkenoyl oder Benzoyl ist und R⁴ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R³ nicht Alkanoyl, Alkenoyl oder Benzoyl bedeutet, R⁴ auch einen zweiwertigen Rest einer aliphatischen, cycloaliphatischen oder aromatischen Dicarbonsäure oder Dicarbaminsäure oder auch die Gruppe -CO- bedeuten kann, oder R³ und R⁴ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter a) angegebene Bedeutung.

Bedeuten etwaige Substituenten C₅-C₇-Cycloalkyl, so stellen sie insbesondere Cyclohexyl dar.

Als C₇-C₈-Aralkyl ist R³ insbesondere Phenylethyl oder vor allem Benzyl. Als C₂-C₅-Hydroxyalkyl ist R³ insbesondere 2-Hydroxyethyl oder 2-Hydroxypropyl.

R³ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.

Bedeutet R⁴ C₂-C₈-Alkenyl, dann handelt es sich z.B. um Allyl, Methallyl, 2-Butenyl, 2-Pentenyl, 2-Hexenyl oder 2-Octenyl.

R⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4'-Diphenylen dar.

Als C₆-C₁₂-Cycloalkylen ist D insbesondere Cyclohexylen.

Beispiele für Polyalkylpiperidin-Verbindungen dieser Klasse sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid
39) 1-Acetyl-4-(N-cyclohexylacetamido)-2,2,6,6-tetramethylpiperidin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 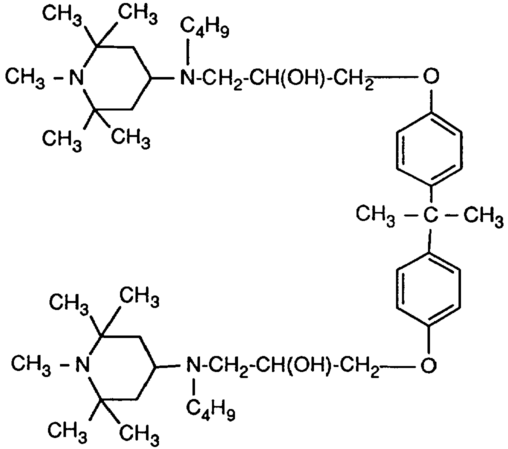
47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetramethylpiperidin
49) 4-Methacrylamido-1,2,2,6,6-pentamethylpiperidin

### c) Verbindungen der Formel (IV)

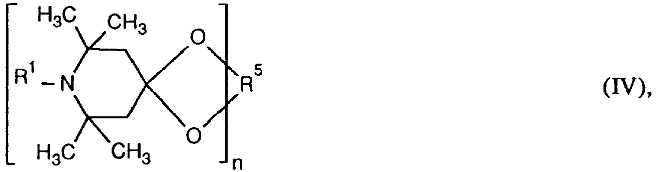

worin n die Zahl 1 oder 2 bedeutet, R¹ die unter a) angegebene Bedeutung hat und R⁵, wenn n 1 ist, C₂-C₈-Alkylen oder C₂-C₈-Hydroxyalkylen oder C₄-C₂₂-Acyloxyalkylen, und wenn n 2 ist, die Gruppe (-CH₂)₂C(CH₂-)₂ bedeutet.

Bedeutet R⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als C₄-C₂₂-Acyloxyalkylen bedeutet R⁵ z.B. 2-Ethyl-2-acetoxymethylpropylen.

Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"-dioxan)--2"-spiro-4"'-(2"',2"',6"',6"'-tetramethylpiperidin).

### d) Verbindungen der Formeln VA, VB und VC

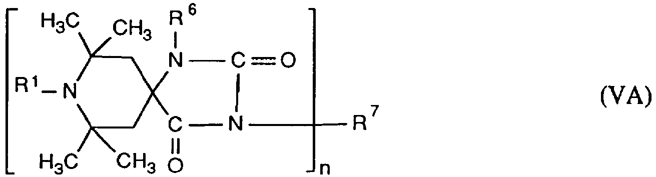

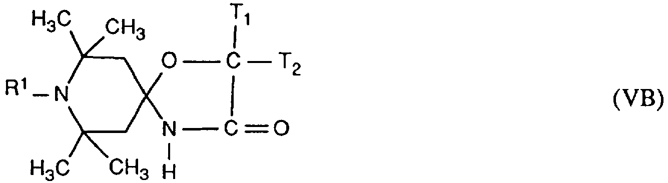

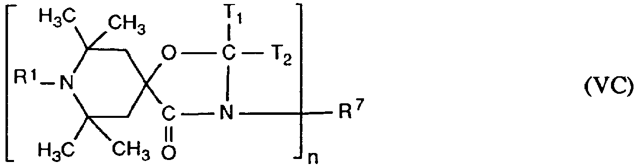

worin n die Zahl 1 oder 2 bedeutet, R¹ die unter a) angegebene Bedeutung hat, R⁶ Wasserstoff, C₁-C₁₂-Alkyl, Allyl, Benzyl, Glycidyl oder C₂-C₆-Alkoxyalkyl ist und R⁷, wenn n 1 ist, Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)p-COO-Q oder der Formel -(CH₂)p-O-CO-Q ist, worin p 1 oder 2 und Q C₁-C₄-Alkyl oder Phenyl sind, wenn n 2 ist, C₂-C₁₂-Alkylen, C₄-C₁₂-Alkenylen, C₆-C₁₂-Arylen, eine Gruppe -CH₂-CH(OH)-CH₂-O-D-O-CH₂-CH(OH)-CH₂-, worin D C₂-C₁₀-Alkylen, C₆-C₁₅-Arylen, C₆-C₁₂-Cycloalkylen ist, oder eine Gruppe -CH₂CH(OZ')CH₂-(OCH₂-CH(OZ') CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt R⁷ C₃-C₅-Alkenyl dar, so bedeutet es z.B. 1-Propenyl, Allyl, Methallyl, 2-Butenyl oder 2-Pentenyl.

Als C₇-C₉-Aralkyl sind R⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclodo-decanring sein.

Bedeutet R⁷ C₂-C₄-Hydroxyalkyl, so stellt es z.B. 2-Hydroxyethyl, 2-Hydroxypropyl, 2-Hydroxybutyl oder 4-Hydroxybutyl dar.

Als C₆-C₁₀-Aryl bedeuten R⁷, T₁ und T₂ insbesondere Phenyl, α-oder β-Naphthyl, die gegebenenfalls mit Halogen oder C₁-C₄-Alkyl substituiert sind.

Stellt R⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂-Alkenylen bedeutet R⁷ insbesondere 2-Butenylen, 2-Pentenylen oder 3-Hexenylen.

Bedeutet R⁷ C₆-C₁₂-Arylen, so stellt es beispielsweise o-, m- oder p-Phenylen, 1,4-Naphthylen oder 4,4'-Diphenylen dar.

Bedeutet Z' C₂-C₁₂-Alkanoyl, so stellt es beispielsweise Propionyl, Butyryl, Octanoyl, Dodecanoyl, aber bevorzugt Acetyl dar.
D hat als C₂-C₁₀-Alkylen, C₆-C₁₅-Arylen oder C₆-C₁₂-Cycloalkylen die unter b) angegebene Bedeutung. Beispiele für Polyalkylpiperidin-Verbindungen dieser Klasse sind folgende Verbindungen:
56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]-decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro-[5.1.11.2]-henei-cosan
64) 2-Butyl-7,7,9,9-tetramethyl-1-oxa-4,8-diaza-3-oxo-spiro-[4,5]decan
65) 8-Acetyl-3-dodecyl-1,3,8-triaza-7,7,9,9-tetramethylspiro[4,5]-decan-2,4-dion oder die Verbindungen der folgenden Formeln:
66) 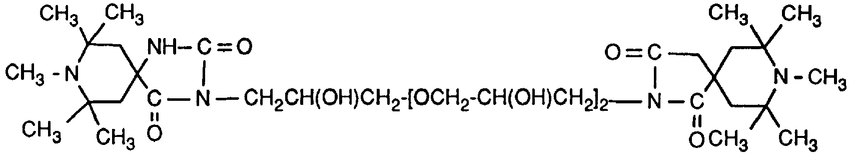
67) 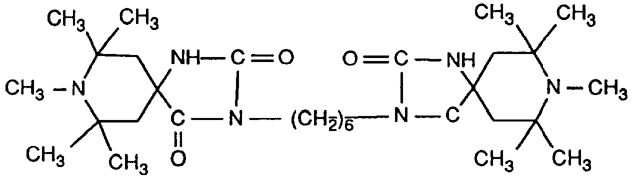
68) 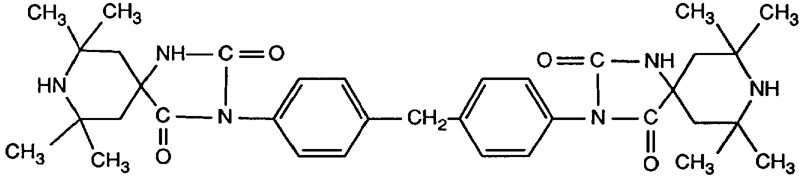
69)

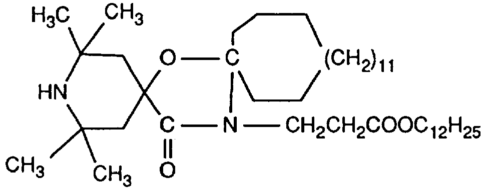

### e) Verbindungen der Formel VI

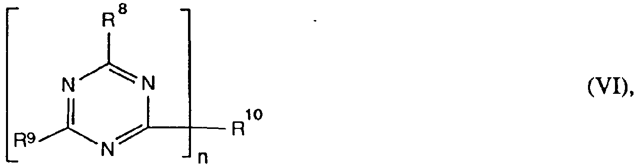

worin n die Zahl 1 oder 2 ist und R⁸ eine Gruppe der Formel 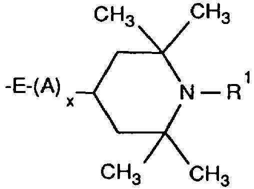 bedeutet, worin R¹ die unter a) angegebene Bedeutung hat, E -O- oder -NR¹¹- ist, A C₂-C₆-Alkylen oder -(CH₂)₃-O-und x die Zahlen O oder 1 bedeuten, R⁹ gleich R⁸ oder eine der Gruppen -NR¹¹R¹², -OR¹³, -NHCH₂OR¹³ oder -N (CH₂OR¹³)₂ ist, R¹⁰, wenn n = 1 ist, gleich R⁸ oder R⁹, und wenn n = 2 ist, eine Gruppe -E-B-E- ist, worin B gegebenenfalls durch -N(R¹¹)- unterbrochenes C₂-C₆-Alkylen bedeutet, R¹¹ C₁-C₁₂-Alkyl, Cyclohexyl, Benzyl oder C₁-C₄-Hydroxyalkyl oder eine Gruppe der Formel 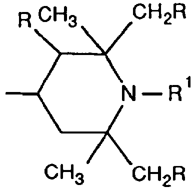 ist, R¹² C₁-C₁₂-Alkyl, Cyclohexyl, Benzyl, C₁-C₄-Hydroxyalkyl und R¹³ Wasserstoff, C₁-C₁₂-Alkyl oder Phenyl bedeuten oder R¹¹ und R¹² zusammen C₄-C₅-Alkylen oder -Oxaalkylen, beispielsweise 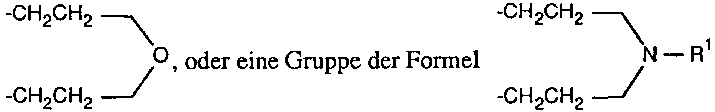 sind oder auch R¹¹ und R¹² jeweils eine Gruppe der Formel 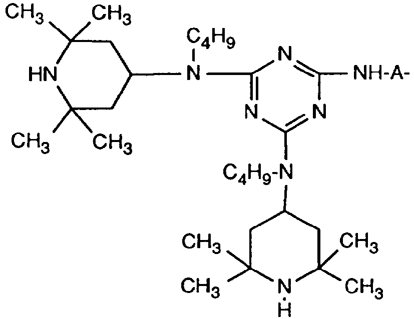 bedeuten.

Bedeuten etwaige Substituenten C₁-C₁₂-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆-Alkylen, so stellt es beispielsweise Ethylen, Propylen, 2,2-Dimethylpropylen, Tetramethylen oder Hexamethylen dar.

Stellen R¹¹ und R¹² zusammen C₄-C₅-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:
70) 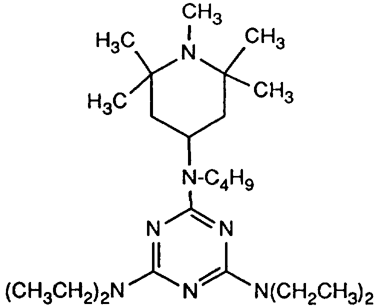
71) 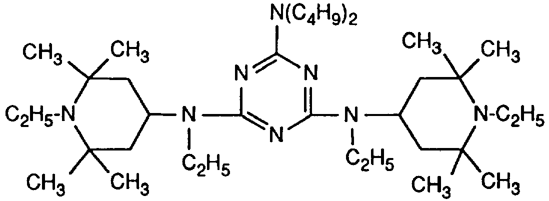
72) 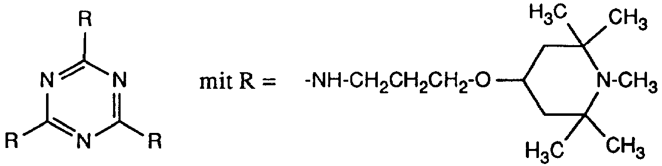
73) 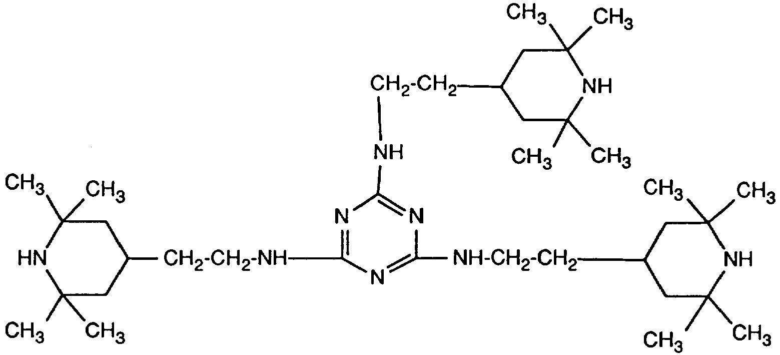
74) 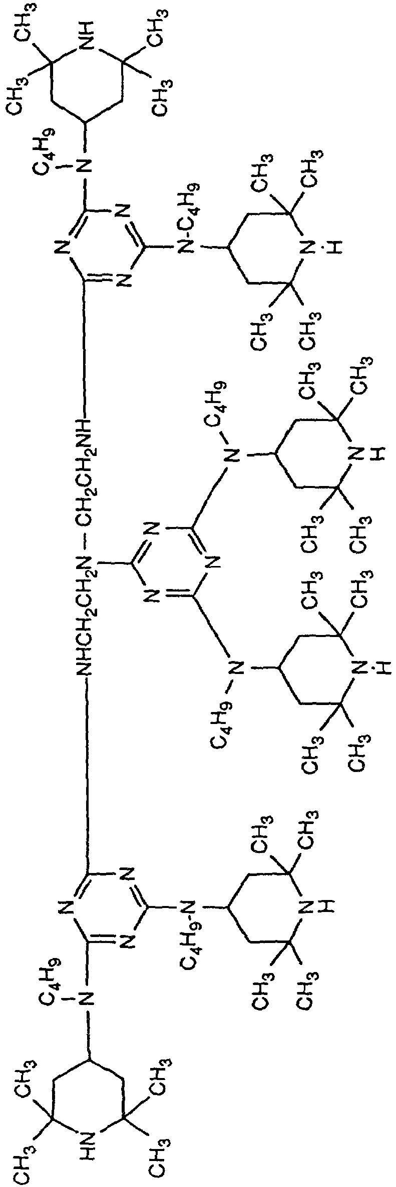
75) 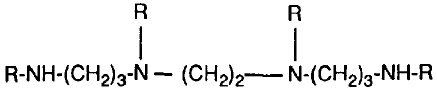 mit R = 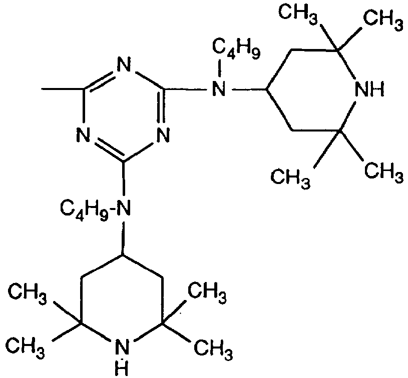
76) 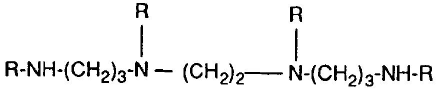 mit R = 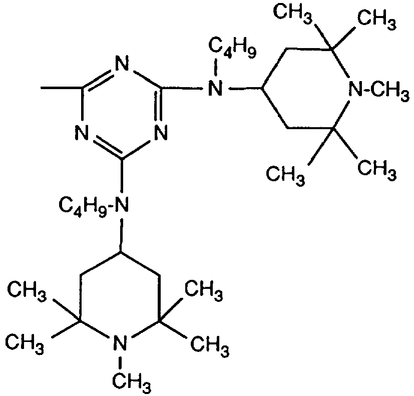 77) 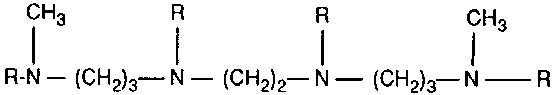 mit R = 78) 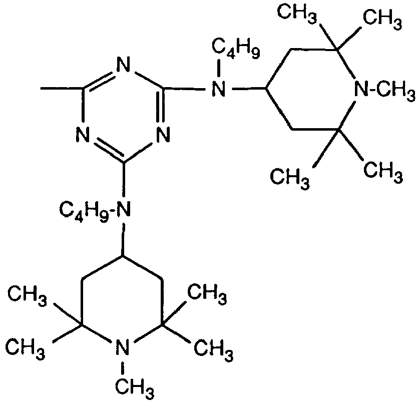 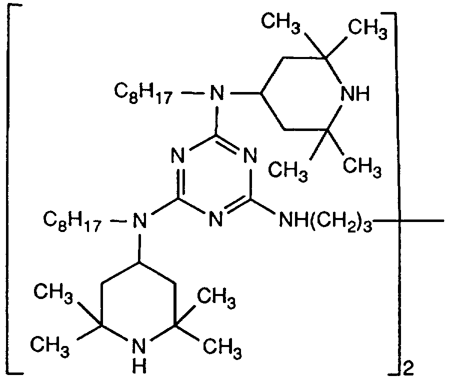
79) 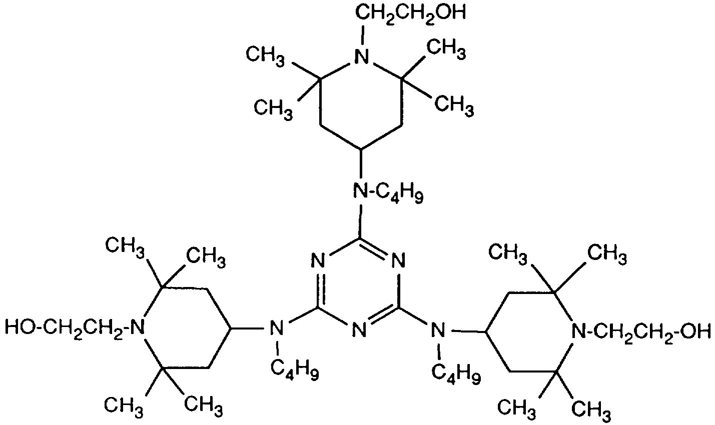
80)

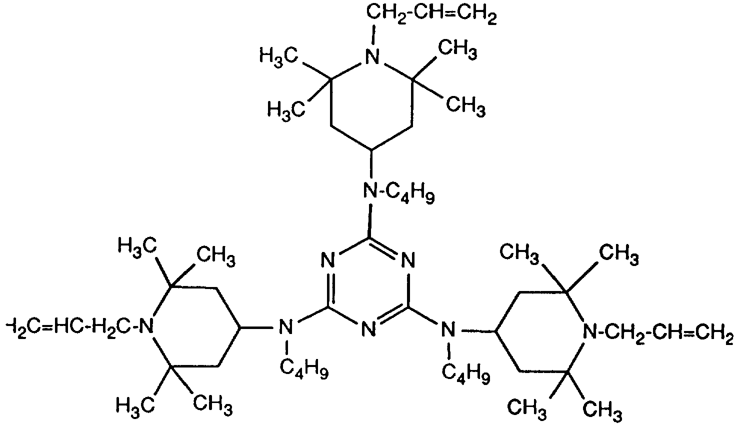

### f) Oligomere oder polymere Verbindungen, deren wiederkehrende Struktureinheit einen oder mehrere 2,2,6,6-Tetraalkylpiperidinreste der Formel (I) enthält, insbesondere Polyester, Polyäther, Polyamide, Polyamine, Polyurethane, Polyharnstoffe, Polyaminotriazine, Poly(meth)acrylate, Polysiloxane, Poly(meth)acrylamide und deren Copolymeren, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.
81) 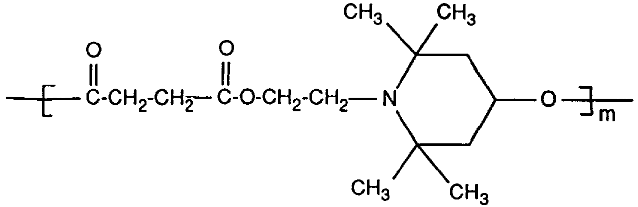
82) 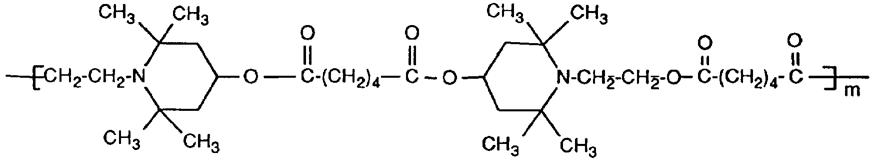
83) 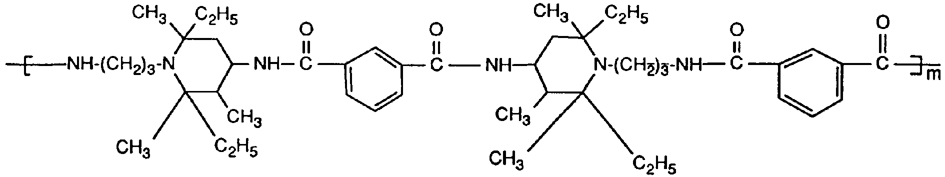
84) 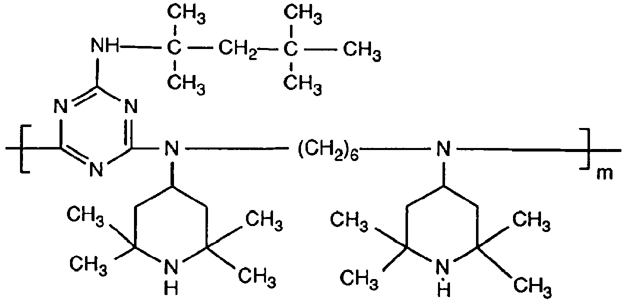
85) 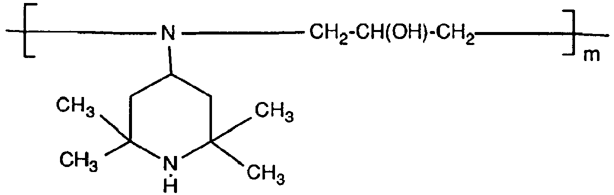
86) 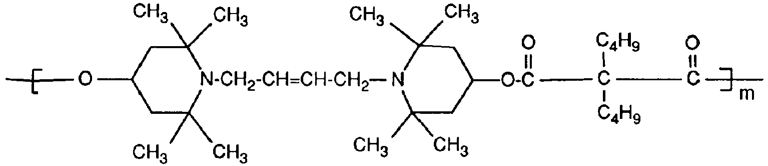
87) 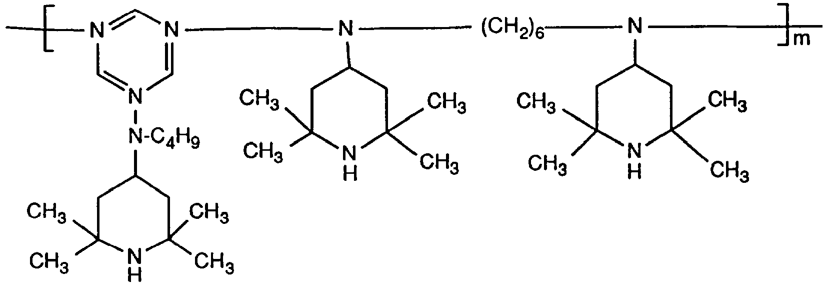
88) 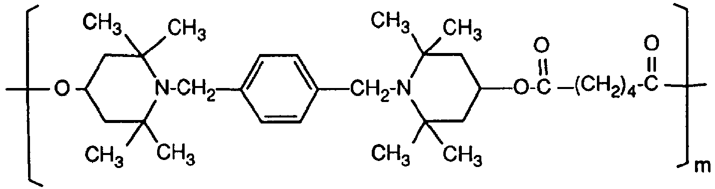
89) 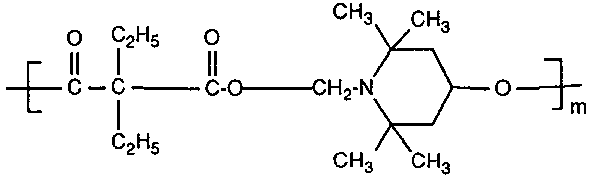
90) 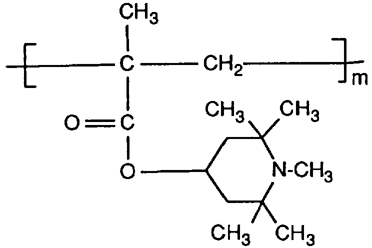
91) 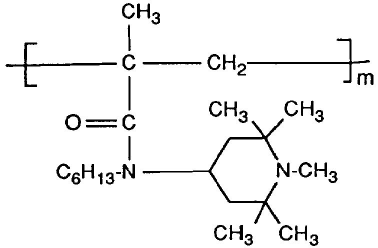
92) 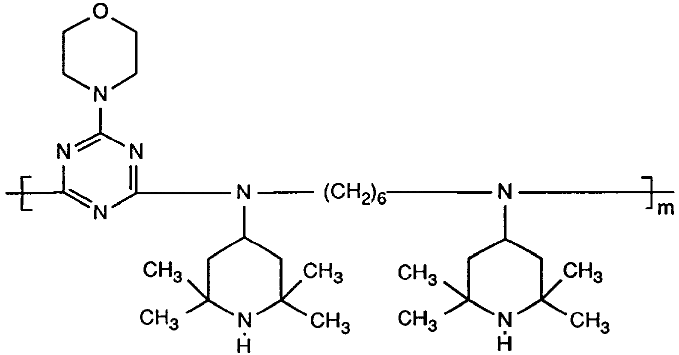
93) 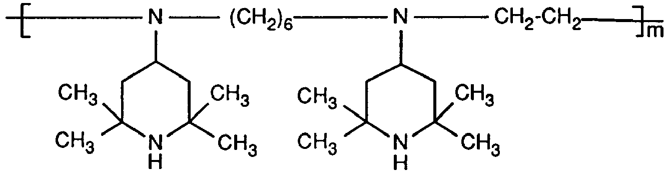
94) 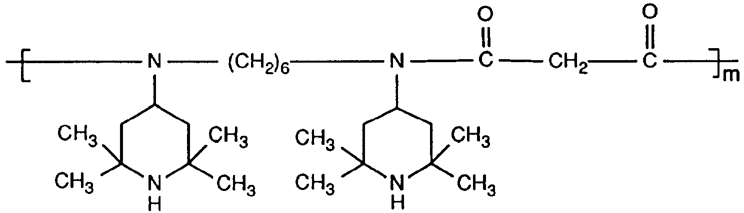
95) 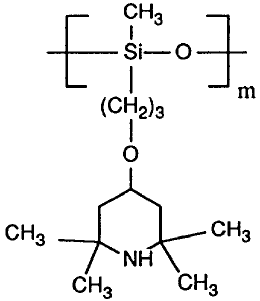
96) 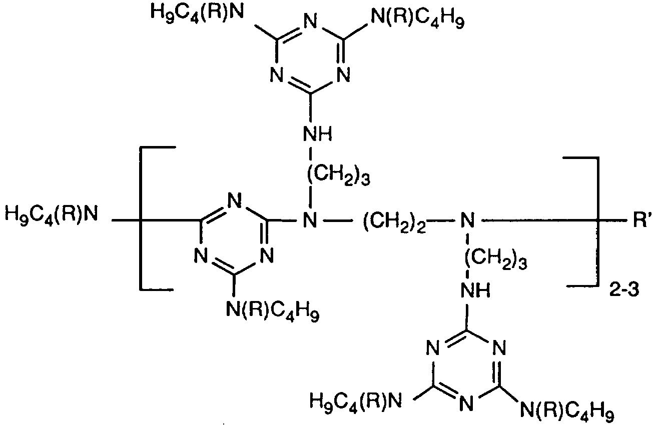 mit R= 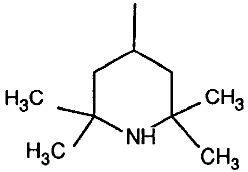 und R'=

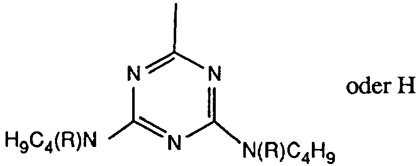

Von diesen Klassen sind die Klassen e) und f) besonders geeignet, insbesondere solche Tetraalkylpiperidinverbindungen, die s-Triazin-Gruppen enthalten. Weiterhin sind besonders geeignet die Verbindungen 74, 76, 84, 87, 92 und 95.

Die Menge des Zusatzes der Tetramethylpiperidinverbindung richtet sich nach dem gewünschten Grad der Stabilisierung. Im allgemeinen setzt man 0,01 bis 0,5 Gew.-%, insbesondere 0,05 bis 0,3 Gew.-%, bezogen auf das Polymer, zu.

Die gegebenenfalls als zusätzliche Stabilisatoren zur Polymerisation zugesetzten Antioxidantien vom Typ der sterisch gehinderten Phenole sind allgemein bekannt als Antioxidantien für organische Materialien und werden für die Stabilisierung von Polymeren häufig verwandt. Beispiele für solche Phenol-Antioxidantien sind:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Tocopherole, z.B. α-Tocopherol, β-Tocopherol, γ-Tocopherol, δ-Tocopherol und Mischungen davon (Vitamin E).
5. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl) butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-di-methyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
7. O-, N- und S-Benzylverbindungen, z.B. 3,5,3',5'-Tetra-tort-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.
8. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
10. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino) 1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4, 6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5 -dicyclohexyl-4-hydroxybenzyl)-isocyanurat.
11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
13. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N, N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo- [2.2.2]-octan.
17. Amide der β-(3,5-Di-tort-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind die oben unter den Punkten 7, 9, 10, 13, 14, 15 und 17 insbesondere Punkt 7, 9, 10 und 13, aufgeführten Antioxidantien. Beispiele für besonders geeignete Antioxidantien sind β-(3,5-Di-tert.butyl-4-hydroxyphenyl)-propionsäure-octadecylester, Tocopherol und 1,3,5-Tris-(3,5-di-tert.butyl-4-hydroxybenzyl)-2,4,6-trimethylbenzol.

Die Menge an zugesetztem Antioxidans richtet sich nach der Menge des Aminoalkyl-1,1'-biphenyl-2,2'-diyl-phosphits oder Aminoalkyl-2,2'-alkyliden-bis-(phenyl)-phosphits. Im allgemeinen werden 0,005 bis 0,5 Gew.-%, insbesondere 0,01 bis 0,1 Gew.-%, bezogen auf das Polymere, zugesetzt.

Erfindungsgemäss verwendbare Verbindungen aus der Reihe der Hydrotalcite, Zeolithe, Metallseifen, Metallcarbonate oder Metalloxide sind sowohl die natürlich vorkommenden Mineralien wie auch synthetisch hergestellte Verbindungen.

Verbindungen aus der Reihe der Hydrotalcite können durch die allgemeine Formel X,

M²⁺₁₋ₓ•M³⁺ₓ•(OH)₂•(Aⁿ⁻)_{x/n}•mH₂O (X)

wobei
M²⁺ = Mg²⁺, Ca²⁺, Sr²⁺, Ba²⁺, Zn²⁺, Cd²⁺, Pb²⁺, Sn²⁺ und/oder Ni²⁺ ist,
M³⁺ = Al³⁺, B³⁺ oder Bi³⁺ ist,
Aⁿ⁻ ein Anion mit der Valenz n darstellt, n eine Zahl von 1-4 ist,
x eine Zahl von 0-0,5 ist und
m eine Zahl von 0-2 ist.
Aⁿ⁻ ist bevorzugt OH-, Cl⁻, Br-, I⁻, ClO₄⁻, HCO₃⁻, CH₃COO⁻, C₆H₅COO⁻, CO₃²⁻, SO₄²⁻, 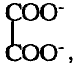 (CHOHCOO)₂²⁻, (CHOH)₄CH₂OHCOO⁻. C₂H₄(COO)₂²⁻, (CH₂COO)₂²⁻, CH₃CHOHCOO⁻, SiO₃²⁻, SiO₄⁴⁻, Fe (CN)₆³⁻, Fe(CN)₆⁴⁻ oder HPO₄²⁻.

Andere Hydrotalcite, die zweckmässig in dem Verfahren, wie oben beschrieben, eingesetzt werden können, sind Verbindungen mit der allgemeinen Formel Xa, 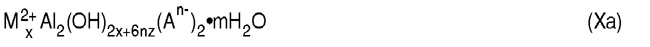 wobei in vorliegender Formel Xa M²⁺ wenigstens ein Metall aus der Reihe von Mg und Zn darstellt und Mg²⁺ bevorzugt ist, Aⁿ⁻ ein Anion, beispielsweise aus der Reihe von CO₃²⁻,

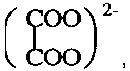

OH⁻ und S²⁻ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugte und kommerziell erhältliche Hydrotalcite sind DHT-4A und DHT-4C der Firma Kyowa, Japan.

Bevorzugt sind Verbindungen aus der Reihe der Hydrotalcite der allgemeinen Formel X,

M²⁺₁₋ₓ•M³⁺ₓ•(OH)₂•(Aⁿ⁻)_{x/n}•mH₂O (X)

wobei M²⁺ die Bedeutung von Mg²⁺ oder einer festen Lösung von Mg und Zn hat, Aⁿ⁻ für CO₃²⁻ steht, x eine Zahl von 0 bis 0,5 ist und m eine Zahl von 0 bis 2 ist.

Ganz besonders bevorzugt sind Hydrotalcite der Formeln

Al₂O₃·6MgO·CO₂·12H₂O,

Mg_{4,5}Al₂(OH)₁₃·CO₃·3,5H₂O,

4MgO·Al₂O₃·CO₂9H₂O,

4MgO·Al₂O₃·CO₂·6H₂O,

ZnO·3MgO·Al₂O₃·CO₂·8-9H₂O oder

ZnO·3MgO·Al₂O₃·CO₂·5-6H₂O.

Erfindungsgemäss können weiterhin Zeolithe der allgemeinen Formel (XI)

M_{x/n}[(AlO₂)ₓ(SiO₂)_{y}]·wH₂O (XI)

wobei n die Ladung des Kations M,
M ein Element der ersten oder zweiten Hauptgruppe,
y : x eine Zahl zwischen 0,8 und 1,2 und
w eine Zahl zwischen 0,5 und 10 ist,
verwandt werden.

Die bevorzugten an sich bekannten Zeolithe, welche im obigen Verfahren eingesetzt werden können, weisen einen durchschnittlichen wirksamen Porendurchmesser von 3-5 Å auf, wobei jene vom Typ NaA, die einen durchschnittlichen wirksamen Porendurchmesser von 4 Å besitzen, weshalb sie auch als Zeolithe 4A bezeichnet werden.

Beispiele für geeignete Zeolithe sind die Verbindungen:

Na₁₂[(AlO₂)₁₂(SiO₂)₁₂]·12H₂O

Ca₄,₅Na₃[(AlO₂)₁₂(SiO₂)₁₂]·30H₂O

K₉Na₃[(AlO₂)₁₂(SiO₂)₁₂]·27H₂O

Bevorzugte und kommerziell erhältliche Zeolithe sind Molekularsiebe.

Erfindungsgemäss können weiterhin Metallseifen verwandt werden. Bevorzugt sind Metallseifen zweiwertiger Metalle mit Fettsäuren, welche 8-28 Kohlenstoffatome aufweisen. Besonders bevorzugt sind Metallseifen des Calciums, wobei Calciumstearat und Calciumpelargonat ganz besonders bevorzugt ist.

Erfindungsgemäss können weiterhin Metallcarbonate oder Metalloxide verwandt werden. Bevorzugt sind Oxide zweiwertiger Metalle. Besonders bevorzugt sind Oxide der Metalle der zweiten Haupt- oder Nebengruppe, wobei Zink- und Magnesiumoxid ganz besonders bevorzugt ist.

Die erfindungsgemäss einsetzbaren Verbindungen werden zur Entfernung des nicht oder nur schwach gebundenen Wassers bei 50-800°C, bevorzugt 80-400°C, getrocknet, sofern sie nicht schon ausreichend getrocknet sind und unter Feuchtigkeitsausschluss gelagert wurden. Die Trocknung kann im Vakuum oder unter Inertgas erfolgen. Die Oberflächen der Substanzen können mit oberflächenaktiven Reagenzien, wie Carbonsäuren oder linearen Alkoholen mit 8 oder mehr C-Atomen, z.B. Stearinsäure, behandelt werden.

Die unter den Reaktionsbedingungen kein Wasser freisetzenden Verbindungen aus der Reihe der Hydrotalcite, Zeolithe, Metallseifen, Metallcarbonate, Metalloxide oder ähnlicher synthetisch hergestellter Verbindungen werden im allgemeinen in einer Menge von 0,005 bis 0,2 Gew.-%, bezogen auf das Polymere, zugesetzt, vorzugsweise in einer Menge von 0,01 bis 0,1 Gew.-%.

Ein weiterer Gegenstand der vorliegenden Erfindung ist die Verwendung der oben näher definierten Aminoalkyl-1,1'-biphenyl-2,2'-diyl-phosphite oder Aminoalkyl-2,2'-alkyliden-bis-(phenyl)-phosphite in einem Verfahren zur Polymerisation von Olefinen an einem Übergangsmetallkatalysator zur Stabilisierung der so erhältlichen Polymeren. Die Bevorzugungen des Verfahrens gelten hierbei analog.

Ein weiterer Gegenstand der vorliegenden Erfindung sind die nach dem oben näher definierten Verfahren erhältlichen Polyolefine. Die Bevorzugungen des Verfahrens gelten hierbei analog.

Die erfindungsgemäß hergestellten Polyolefine eignen sich besonders zur Herstellung von Halbzeugen (Platten, Rohren und Profilen beliebigen Querschnittes) und für folgende Fertigungsverfahren: Rotationsformen, Schleudergießen, Spritzgießen, Thermoplastschaumguß, Spritzpressen, Pressen, Sintern, Kalandieren, Extrudieren, Hohlkörperblasformen, Extrusionsstreckblasen, Gießen von Hohlkörpern, Spinnen, Schäumen, Pulverbeschichten, Beschichten und Kabelummantelung.

Die folgenden Beispiele erläutern das Verfahren näher. Darin, sowie in der übrigen Beschreibung und in den Patentansprüchen, bedeuten Teile Gewichtsteile, % Gewichtsprozente und " 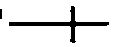 " einen tert.Butylrest soweit nicht anders angegeben.

In den Beispielen verwandte Additive:
AP-1: 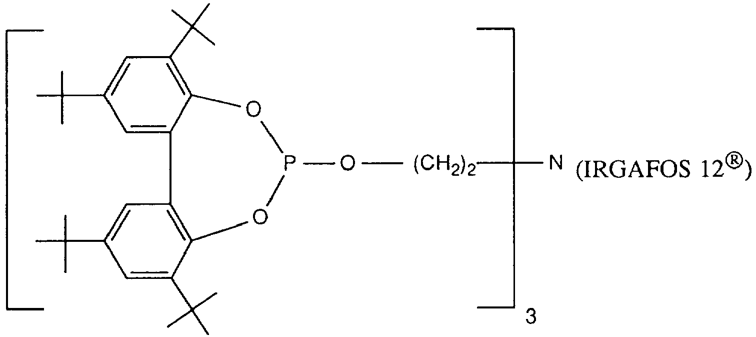 zum Vergleich:
   VP-1: Tris-(2,4-di-tert.butylphenyl)-phosphit (IRGAFOS 168®)
VP-2: 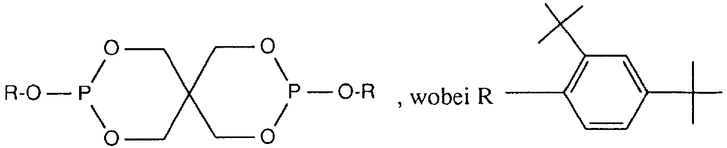 ist (ULTRANOX 626®)
HALS1: 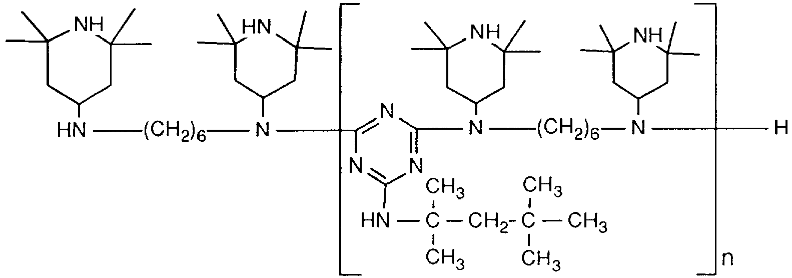 (Chimassorb 944^{®})
PHENOL 1:

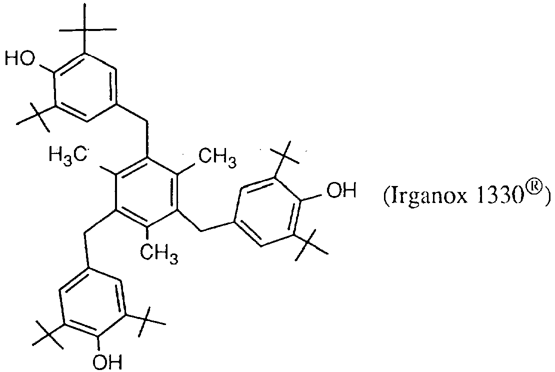

### Beispiel 1: (Propylen-Polymerisation)

2 g Magnesiumethylat [Mg(OC₂H₅)₂] werden bei Raumtemperatur mit 2 ml 1,3-Dimethoxy-2,2-diisobutylpropan, 30 ml Toluol und 30 ml Titantetrachlorid versetzt. Die Suspension wird unter Rühren auf 130°C geheizt und bei dieser Temperatur eine halbe Stunde gerührt und heiß filtriert. Der Rückstand wird mit 30 ml Toluol und 20 ml Titantetrachlorid versetzt, eine halbe Stunde bei 130°C gerührt und heiß filtriert. Anschließend wird der Rückstand fünfmal mit 50 ml Hexan gewaschen und getrocknet. Der Katalysator enthält 2 % Titan, 15 % Magnesium, 58 % Chlor.

Ein 3-1 Stahlautoklav wird bei 110°C eine halbe Stunde evakuiert, dann bei gleicher Temperatur mit gasförmigem Propylen gespült. Der Autoklav wird auf 20°C gekühlt, und nacheinander werden die Additive (als Pulver) und der Katalysator (30 mg, das vorher mit 0,4 ml Triethylaluminium in 25 ml Hexan während 10 min kontaktiert wurde) zugegeben. Der Autoklav wird verschlossen, 0,1 bar Wasserstoff wird auf- und 650 g fliissiges Propylen wird zugegeben, der Rührer eingeschaltet und die Temperatur auf 70°C erhöht. Nach vier Stunden wird der Autoklav entspannt, 10 ml Isopropanol werden zugegeben und 30 min bei 70°C gerührt. Das Polymer wird entnommen und bei 80°C über Nacht im Vacuum getrocknet. Ausbeute um 300 g.

500 g des so erhaltenen Polypropylens werden unter Zusatz von 0,1 % Irganox 1010 und 0,1 % Calciumstearat auf einem Göttfertextruder mit On-Line Viscosimeter dreimal extrudiert (1=400 mm, d=20 mm, ca 50 UpM, gekiihlter Einzug, 260, 270, 280°C, Verweilzeit ca 90 sec).

Das Granulat wird bei 230°C zu 1 mm dicken Platten verpreßt. Die Platten werden in Wasser von einer Temperatur von 90°C gelagert und die Vergilbung beobachtet.

Die erfindungsgemäß mit 0,1 % AP-1 stabilisierte Probe zeigt sehr gute Verarbeitungseigenschaften und wird im Vergleich zur unstabilisierten Probe und im Vergleich zu der mit 0,1 % VP-1 bzw. VP-2 stabilisierten Probe deutlich weniger verfärbt.

**Tabellarische Zusammenstellung der Propylen-Polymerisationen:**

| Beispiel | Additiv | Menge [mg] | PP-Ausb. g | I.I. |
|---|---|---|---|---|
| 1a | kein | 0 | 305 | 95 |
| 1b | Irgafos 12 | 150 | 310 | 95 |
| 1c | Irgafos 168 | 150 | 300 | 95 |
| 1d | Ultranox 626 | 150 | 305 | 95 |
| 1e | Irgafos 12 + | 150 + | 300 | 95 |
| Chimassorb 944 | 300 | | | |
| 1f | Irgafos 12 + | 150 + | 305 | 95 |
| | Irganox 1330 | 150 | | |

### I.I.: Isotaktizitätsindex (% des in siedendem Heptan unlöslichen PP)

Irgafos 12 beeinflußt die Polymerisation nicht.

### Langzeit Wärmestabilitätstest: Ofenalterung bei 135°C

Die 5 PP Proben werden auf einem Einschneckenextruder dreimal extrudiert. Die Temperatur der letzten Zone betrug 280°C. Die Proben werden jeweils zusätzlich mit 0.1% Irganox 1010® (Pentaerythrityl-tetrakis(3-(3',5'-di-tert. butyl-4'-hydroxyphenyl]-propionat) und 0.1% Calciumstearat stabilisiert.

| Bsp | Additiv | YI 1x | YI 3x | LTTS 1x |
|---|---|---|---|---|
| 1a | kein | 6.3 | 7.7 | 42 |
| 1b | Irgafos 12 | 5.3 | 6.7 | 78 |
| 1c | Irgafos 168 | 6.5 | 7.3 | 49 |
| 1d | Ultranox 626 | 6.2 | 8.6 | 53 |

### YI: Yellowness Index (gemessen an 2 mm Platten)

LTTS (Tage bei 135 C): Ofenalterung bei 135°C (1 mm Platten aus Muster der ersten Extrusion)

Die mit Irgafos 12 stabilisierte Probe zeigt die beste Farbe und Stabilität in der Wärmealterung bei 135°C.

**Wasserlaqerunq bei 90°C:**

| Bsp. | Additiv | YI 0 | YI 1 | YI 2 | YI 4 |
|---|---|---|---|---|---|
| 1a | kein | 6.3 | 26.1 | 37.2 | 51.2 |
| 1b | Irgafos 12 | 5.3 | 13.2 | 17.7 | 26.7 |
| 1c | Irgafos 168 | 6.5 | 25.8 | 39.2 | 56.3 |
| 1d | Ultranox 626 | 6.2 | 17.9 | 29.8 | 50.3 |

YI: Yellowness Index nach 0, 1, 2, und 4 Wochen Wasserlagerung

Die mit Irgafos 12 stabilisierte Probe zeigt die geringste Verfärbung in der Heißwasserlagerung.

### Beispiel 2: (Ethylen-Polymerisation mit Ziegler Katalysator)

2 g Magnesiumethylat (Mg(OC₂H₅)₂) werden bei Raumtemperatur 30 ml Toluol und 30 ml Titantetrachlorid versetzt. Die Suspension wird unter Rühren auf 130°C geheizt und bei dieser Temperatur eine halbe Stunde gerührt und heiß filtriert. Der Riickstand wird mit 30 ml Toluol und 30 ml Titantetrachlorid versetzt, eine halbe Stunde bei 130°C gerührt und heiß filtriert. Der Rückstand wird mit 30 ml Toluol und 30 ml Titantetrachlorid versetzt, eine Stunde bei 130°C gerührt und heiß filtriert. Anschließend wird der Rückstand fünfmal mit 50 ml Hexan gewaschen und getrocknet. Der Katalysator enthält 2 % Titan, 15 % Magnesium, 58 % Chlor.

Ein 3-1 Stahlautoklav wird bei 110°C eine halbe Stunde evakuiert, dann bei gleicher Temperatur mit Ethylen gespült. Der Autoklav wird auf 20°C abgekiihlt, und nacheinander werden 1 l Heptan, die Additive (als Pulver) und der Katalysator (30 mg, das vorher mit 0,4 ml Triethylaluminium in 25 ml Hexan während 10 min kontaktiert wurde) zugegeben. Der Autoklav wird verschlossen, 2 bar Wasserstoff und Ethylen zu einem Gesamtdruck von 10 bar aufgegeben, der Riihrer eingeschaltet und die Temperatur auf 80°C erhöht. Nach vier Stunden wird der Autoklav entspannt, 10 ml Isopropanol werden zugegeben und 30 min bei 70°C gerührt. Das Polymer wird entnommen, Hexan wird im Rotovap entfernt und das Polymer bei 80°C über Nacht im Vacuum getrocknet. Die Ausbeute beträgt 200 g.

38 g des so erhaltenen Polyethylens werden unter Zusatz von 0,1 % Irganox 1010 und 0,1 % Calciumstearat während 10 Minuten in einem Brabenderplastographen bei 180°C geknetet. Die Masse wird dann bei 200°C zu einer 1 mm dicken Platte gepreßt und in Wasser von einer Temperatur von 90°C gelagert. Man bestimmt die resultierende Vergilbung.

### Beispiel 3: (Ethylen-Polymerisation mit Phillips Katalysator)

Ein Katalysator mit 1 % Cr auf Silicagel wird bei 900°C mit Sauerstoff aktiviert.

Ein 3-1 Stahlautoklav wird bei 110°C eine halbe Stunde evakuiert, dann bei gleicher Temperatur mit Ethylen gespült. Der Autoklav wird auf 20°C gekiihlt, und nacheinander werden 1 l Heptan, die Additive (als Pulver) und ca 100 mg Katalysator zugegeben. Der Autoklav wird verschlossen und Ethylen zu einem Gesamtdruckvon 14 bar zugegeben, der Rührer eingeschaltet und die Temperatur auf 90°C erhöht. Nach acht Stunden wird der Autoklav entspannt, 10 ml Isopropanol werden zugegeben und 30 min bei 70°C gerührt. Das Polymer wird entnommen, Heptan wird im Rotovap entfernt und das Polymer bei 80°C über Nacht im Vacuum getrocknet. Die Ausbeute beträgt 200 g.

38 g des so erhaltenen Polyethylen werden unter Zusatz von 0,1 % Irganox 1010 und 0,1 % Calciumstearat während 10 Minuten in einem Brabenderplastographen bei 180°C geknetet. Die Masse wird dann bei 200°C zu einer 1 mm dicken Platte gepreßt und in Wasser von einer Temperatur von 90°C gelagert. Man bestimmt die resultierende Vergilbung.

Die erfindungsgemäß mit 0,1 % AP-1 stabilisierte Probe zeigt sehr gute Verarbeitungseigenschaften und wird im Vergleich zu der mit 0,1 % VP-1 stabilisierten Probe deutlich weniger verfärbt.

**Tabellarische Zusammenstellung der Ethylenpolymerisationen**

| 200 mg Cr-Katalysator (1% Cr auf Silikagel): | | | |
|---|---|---|---|
| Bsp. | Additiv | Menge | Ausbeute |
| 3a | Irgafos 12 | 300 | 190 |
| 3b | Irgafos 168 | 300 | 230 |

### Wasserlagerung bei 90°C

0.1% Irganox 1010 und 0.1% Calciumstearat werden mittels Brabender eingearbeitet und in einer Heizpresse zu 2 mm starken Platteii gepreßt. Die Platten werden bei 90°C in Wasser gelagert.

| Bsp | Additiv | YI 0 | YI 2 | YI 4 |
|---|---|---|---|---|
| 3a | Irgafos 12 | 3.7 | 15.4 | 18.1 |
| 3b | Irgafos 168 | 4.4 | 27.9 | 35.0 |

Die mit Irgafos 12 stabilisierte Probe vergilbt wesentlich weniger als die Vergleichsprobe.

## Patentansprüche

1. Verfahren zur Herstellung von Olefinpolymeren durch Polymerisation an einem Übergangsmetallkatalysator, **dadurch gekennzeichnet, dass** man die Polymerisation unter Zusatz mindestens einer Verbindung der Formel 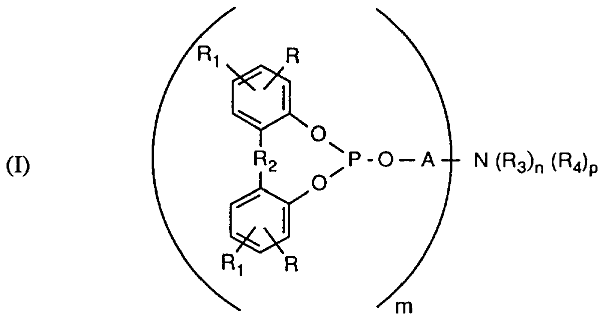 durchführt, worin
n = 1 und p = 1 sind, wenn m = ist;
n = 1 und p = 0 sind, wenn m = 2 ist;
und n und p null sind, wenn m = 3 ist;
und worin R für eine Alkylgruppe mit 1 bis 18 Kohlenstoffatomen;
R₁ für Wasserstoff oder eine Alkylgruppe mit 1 bis 18 Kohlenstoffatomen;
R₂ für eine direkte Bindung oder Alkylen mit 1 bis 12 Kohlenstoffatomen;
A für Alkylen mit 1 bis 6 Kohlenstoffatomen oder Cycloalkylen mit 5 oder 6 Kohlenstoffatomen;
R₃ für Alkyl mit 1 bis 18 Kohlenstoffatomen oder 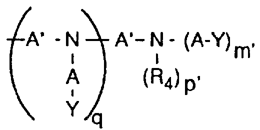 wobei Y 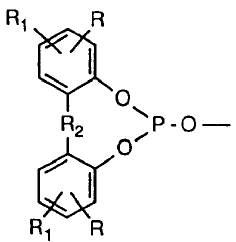 und A' Alkylen mit 1 bis 6 Kohlenstoffatomen oder Cycloalkylen mit 5 oder 6 Kohlenstoffatomen darstellen;
m' 1 oder 2;
p' 0 oder 1; und
q 0-5 sind; sowie
A, R, R₁ und R₂ die oben angegebene Bedeutung haben,
mit der Massgabe, dass, wenn p, p' und q 0 sind, -N-A'-N eine Diazacycloalkylgruppe mit 2 bis 10 Kohlenstoffatomen bedeuten kann oder, wenn m 1 und p 0 sind, N-R₃ eine Azacycloalkylgruppe mit 2 bis 10 Kohlenstoffatomen oder eine Azaoxacycloalkylgruppe mit 3 bis 7 Kohlenstoffatomen bedeutet;
und R₄ für Alkyl mit 1 bis 18 Kohlenstoffatomen steht.

2. Verfahren nach Anspruch 1, **dadurch gekennzeichnet, dass** sich bei der Verbindung der Formel (I) R im Phenylring in ortho-Stellung zum Phosphitsauerstoff befindet.

3. Verfahren nach Anspruch 1, **dadurch gekennzeichnet, dass** sich bei der Verbindung der Formel (I) R₁ im Phenylring in para-Stellung zum Phosphitsauerstoff befindet.

4. Verfahren nach Anspruch 1, **dadurch gekennzeichnet, dass** bei der Verbindung der Formel (I) m eine Zahl 1, 2 oder 3 ist; R C₁-C₄-Alkyl; R₁ C₁-C₈-Alkyl; R₂ eine direkte Bindung, Methylen oder Ethyliden; und R₃ und R₄ C₁-C₄-Alkyl bedeuten.

5. Verfahren gemäss Anspruch 1, **dadurch gekennzeichnet, dass** man 0,005 bis 0,5 Gew.-%, insbesondere 0,02 bis 0,2 Gew.-%, bezogen auf das Polymere, der Verbindung der Formel (I) verwendet.

6. Verfahren gemäss Anspruch 1, **dadurch gekennzeichnet, dass** man als zusätzlichen Stabilisator mindestens eine 2,2,6,6,-Tetramethylpiperidinverbindung oder mindestens ein sterisch gehindertes Phenol oder mindestens eine unter den Reaktionsbedingungen kein Wasser freisetzende Verbindung aus der Reihe der Hydrotalcite, Zeolithe, Metallseifen, Metallcarbonate oder Metalloxide bei der Polymerisation zusetzt, wobei auch Kombinationen der zusätzlichen Stabilisatoren/Zusätze verwandt werden können.

7. Verfahren gemäss Anspruch 1, **dadurch gekennzeichnet, dass** man als zusätzlichen Stabilisator eine Verbindung der folgenden Formeln verwendet 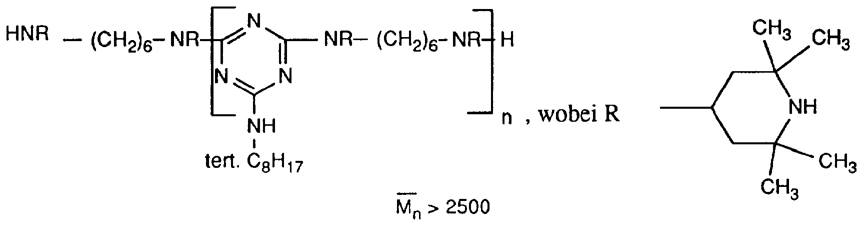 bedeutet; 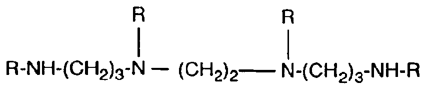 mit R =
oder 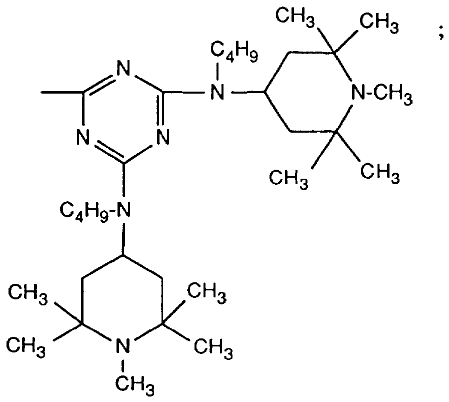 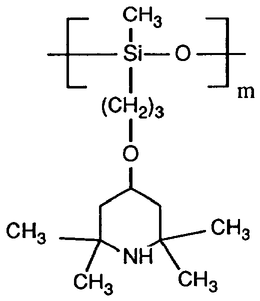 mit Mₙ>1500.

8. Verfahren gemäss Anspruch 1, **dadurch gekennzeichnet, dass** man als zusätzlichen Stabilisator ein Antioxidans vom Typ der sterisch gehinderten Phenole verwendet

9. Verfahren gemäss Anspruch 1, **dadurch gekennzeichnet, dass** man als zusätzlichen Stabilisator β-(3,5-Di-tert. butyl-4-hydroxyphenyl)-propionsäure-octadecylester, Tocopherol oder 1,3,5-Tris-(3,5-di-tert.butyl-4-hydroxyben-zyl)-2,4,6-trimethylbenzol verwendet.

10. Verfahren gemäss Anspruch 1, **dadurch gekennzeichnet, dass** man als zusätzlich bei der Polymerisation ein Hydrotalcit einsetzt.

11. Verwendung einer Verbindung der Formel (I) gemäss Anspruch 1 in einem Verfahren zur Polymerisation von Olefinen an einem Übergangsmetallkatalysator zur Stabilisierung der so erhältlichen Polymeren.

12. Stabilisiertes Polyolefin, erhältlich nach dem Verfahren des Anspruches 1.

13. Stabilisiertes Polyethylen oder Polypropylen gemäss Anspruch 12 mit hohem Molekulargewicht.
